# EUROPÄISCHE PATENTSCHRIFT

(11) **EP 4 563 440 B1**
(45) Veröffentlichungstag und Bekanntmachung des Hinweises auf die Patenterteilung: **28.10.2026**
(21) Anmeldenummer: 23185939.8
(22) Anmeldetag: 17.07.2023
(51) Int. Cl.: G06N 7/01, G06N 20/00, B61L 23/04, B61L 29/08

(54) **EIN ÜBERWACHTES MASCHINELLES LERNEN EINES COMPUTERIMPLEMENTIERTEN VERFAHRENS ZUR DURCHFÜHRUNG EINES TECHNISCHEN PROZESSES**
SUPERVISED MACHINE LEARNING OF A COMPUTER-IMPLEMENTED METHOD FOR PERFORMING A TECHNICAL PROCESS
APPRENTISSAGE AUTOMATIQUE SUPERVISÉ D'UN PROCESSUS MIS EN OEUVRE PAR ORDINATEUR POUR EFFECTUER UN PROCESSUS TECHNIQUE

(43) Veröffentlichungstag der Anmeldung: 04.06.2025
(73) Patentinhaber: Siemens Mobility GmbH, 80997 München (DE)
(72) Erfinder: Braband, Jens, 38106 Braunschweig (DE)
(74) Vertreter: Siemens Patent Attorneys

(56) Entgegenhaltungen:
- US-A1- 2022 147 869
- HERMANN KAINDL ET AL: "Towards Probability-based Safety Verification of Systems with Components from Machine Learning", ARXIV.ORG, CORNELL UNIVERSITY LIBRARY, 201 OLIN LIBRARY CORNELL UNIVERSITY ITHACA, NY 14853, 2 March 2020 (2020-03-02), XP081612493
- SIKORA PAVEL ET AL: "Artificial Intelligence-Based Surveillance System for Railway Crossing Traffic", IEEE SENSORS JOURNAL, IEEE, USA, vol. 21, no. 14, 16 October 2020 (2020-10-16), pages 15515 - 15526, XP011866750, ISSN: 1530-437X, [retrieved on 20210714], DOI: 10.1109/JSEN.2020.3031861

## Beschreibung

Die vorliegende Erfindung betrifft ein Verfahren zum überwachten maschinellen Lernen eines computerimplementierten Verfahrens zur Durchführung eines technischen Prozesses sowie ein technisches System zum Durchführen eines technischen Prozesses. Außerdem betrifft die Erfindung ein Computerprogramm sowie ein computerlesbares Speichermedium, welche beide ein Programm zur Durchführung des genannten überwachten maschinellen Lernens aufweisen.

Verfahren des maschinellen Lernens zum Trainieren von Algorithmen, die auf künstliche Intelligenz beruhen, werden derzeit schwerpunktmäßig erforscht. Hierbei verbessert das maschinelle Lernen sukzessive die Erfolgsquote bei der Anwendung des betreffenden Algorithmus, wobei sich die Erfolgsquote beispielsweise statistisch darstellen lässt.

Unter künstlicher Intelligenz (im Folgenden auch mit KI abgekürzt), auch Artificial Intelligence genannt, ist im Rahmen dieser Erfindung im engeren Sinne die Fähigkeit eines rechnergestützten maschinellen Lernens, auch Machine Learning genannt, (im Folgenden auch mit ML abgekürzt) zu verstehen. Es geht dabei um das statistische Lernen der Parametrisierung von Algorithmen, vorzugsweise für sehr komplexe Anwendungsfälle. Mittels ML erkennt und erlernt das System anhand von zuvor eingegebenen Lerndaten Muster und Gesetzmäßigkeiten bei den erfassten Prozessdaten. Mithilfe geeigneter Algorithmen können durch ML eigenständig Lösungen zu aufkommenden Problemstellungen gefunden werden. ML gliedert sich in drei Felder - überwachtes Lernen, unüberwachtes Lernen und bestärkendes Lernen (Reinforcement Learning), mit spezifischeren Anwendungen, zum Beispiel Regression und Klassifikation, Strukturerkennung und -vorhersage, Datengenerierung (Sampling) oder autonomes Handeln.

Beim überwachten Lernen wird das System durch den Zusammenhang von Eingabe und zugehöriger Ausgabe bekannter Daten trainiert und erlernt auf diese Weise approximativ funktionale Zusammenhänge. Dabei kommt es auf die Verfügbarkeit geeigneter und ausreichender Daten an, denn wenn das System mit ungeeigneten (z.B. nicht-repräsentativen) Daten trainiert wird, so lernt es fehlerhafte funktionale Zusammenhänge. Es lernt, wie Datengruppen zu bilden und zu erweitern sind, was typisch für den betreffenden Anwendungsfall ist und wo Abweichungen bzw. Anomalien auftreten. Dadurch lassen sich Anwendungsfälle beschreiben und Fehlerzustände entdecken. Beim bestärkenden Lernen lernt das System durch Versuch und Irrtum, indem es zu gegebenen Problemstellungen Lösungen vorschlägt und über eine Feedbackfunktion eine positive oder negative Bewertung zu diesem Vorschlag erhält. Je nach Belohnungsmechanismus erlernt das KI-System, entsprechende Funktionen auszuführen.

Die Konstruktion von einer Funktion f auf der Basis von (x1, y1), ..., (xn, yn), hier ist der Übersichlichtkeit halber das Beispiel für Wertepaare in einem zweidimensionalen Raum gezeigt, auf den die Erfindung jedoch nicht beschränkt ist, bezeichnet man als statistisches Lernen. Die Variable x bezeichnet hierbei die Eingabewerte und die Variable y die Ausgabewerte der Funktion f. Dieses statistische Lernen liegt dem maschinellen Lernen zugrunde.

Der bekannte Stand der Technik, die DE 10 2021 200 803 A1, von dem die Erfindung ausgeht, betrifft eine überwachtes maschinelles Lernen. Hierbei ist vorgesehen, dass die Anlernphase auch einen Trainingsschritt auf der Basis von simulierten Messdaten, die durch Simulation auf der Basis eines Simulationsmodells der technischen Einrichtung erzeugt worden sind, und/oder realen Messdaten, die von einer oder mehreren realen Messdatenquellen der technischen Einrichtung erzeugt worden sind, und einen Validierungsschritt, der die Qualität der Anlernphase überprüft, umfasst.

Das Dokument US 2022/147869 A1 beschreibt eine Methode zum Trainieren eines trainierbaren Moduls. Mehrere Modifikationen des trainierbaren Moduls, die sich so weit voneinander unterscheiden, dass sie beim fortschreitenden Lernen nicht deckungsgleich ineinander übergehen, werden jeweils mit einer Teilmenge der Lerndatensätze vortrainiert. Allen Modifikationen werden Lern-Eingangsgrößenwerte eines Lerndatensatzes als Eingangsgrößen zugeführt, aus der Abweichungen der Ausgangsgrößenwerte berechnet werden, in welche die Modifikationen die Lern-Eingangsgrößenwerte jeweils umwandeln. Es wird ein Maß für die Unsicherheit dieser Ausgangsgrößenwerte ermittelt und dem Lerndatensatz als dessen Unsicherheit zugeordnet. Anhand der Unsicherheit wird eine Bewertung des Lerndatensatzes ermittelt, die ein Maß dafür ist, inwieweit die Zuordnung der Lernoutputvariablenwerte zu den Lerninputvariablenwerten im Lerndatensatz zutreffend ist. Das Dokument SIKORA PAVEL ET AL: "Artificial lntelligence-Based Surveillance System for Railway Crossing Traffic", IEEE SENSORS JOURNAL, IEEE, USA, Bd. 21, Nr. 14, 16. Oktober 2020 , Seiten 15515-15526, ISSN: 1530-437X, 001: 10.1109/JSEN.2020. 3031861 beschreibt die praktische Umsetzung von Deep-Learning-Methoden zur Erhöhung der Sicherheit in einem spezifischen ITS-Szenario: Bahnübergängen. Das entwickelte System verwendet Kameras, die den Übergangsbereich an einem bestimmten Bahnübergang erfassen.

Problematisch im Stand der Technik ist, dass Anwendungen, die sicherheitsrelevant sind, besonderen Anforderungen bei der Zulassung gerecht werden müssen. Hierbei sind vorgegebene Sicherheitsstandards zu erreichen, wobei es noch nicht gelungen ist, bei einem durch maschinelles Lernen trainierten Algorithmus, der eine künstliche Intelligenz anwendet, einen geeigneten Sicherheitsnachweis zu führen, damit dieser die sicherheitsrelevante Anwendung im laufenden Betrieb optimieren kann.

Aufgabe der vorliegenden Erfindung ist es deshalb, ein überwachtes maschinelles Lernen dahingehend zu verbessern, dass eine Trainingsphase des maschinellen Lernens möglichst so zuverlässig abgeschlossen werden kann, dass eine anschließende Validierung des Verfahrens mit möglichst hoher Wahrscheinlichkeit erfolgreich sein wird. Insbesondere ist es Aufgabe der Erfindung, dass eine Validierung des Ergebnisses eines überwachten maschinellen Lernens mit möglichst hoher Wahrscheinlichkeit der Richtigkeit entspricht und somit auch für sicherheitsrelevante technische Prozesse, insbesondere im laufenden Betrieb, zum Einsatz kommen kann. Weiterhin ist es Aufgabe der Erfindung, ein technisches System anzugeben, welches einem maschinellen Lernen insbesondere auch dann zugänglich ist, wenn dieses mit hohen Sicherheitsanforderungen betrieben werden muss. Zuletzt ist es Aufgabe der Erfindung ein Computerprogramm sowie ein computerlesbarer Speichermedium anzugeben, mit dem das überwachte maschinelle Lernen durchführbar ist.

Die Erfindung wird in den unabhängigen Ansprüchen dargelegt und weitere Ausführungsformen werden in den abhängigen Ansprüchen definiert.

Zur Lösung der Aufgabe wird erfindungsgemäß ein Verfahren zum überwachten maschinellen Lernen (im Folgenden kurz als überwachtes maschinelles Lernen bezeichnet) nach Anspruch 1 vorgeschlagen.

Vorgeschlagen wird demnach ein überwachtes maschinelles Lernen eines computerimplementierten Verfahrens zur Durchführung eines technischen Prozesses, bei dem die folgenden Schritte durchgeführt werden, dass
auf einen Datenpool, enthaltend Datensätze mit Eingabedaten für den Prozess und den Eingabedaten zugeordneten, ein richtiges Prozessergebnis beschreibenden Ausgabedaten, erstellt wird,
das computerimplementierte Verfahren unter Verwendung der Datensätzen als Trainingsdatensätze in einer Trainingsphase trainiert wird, wobei Verfahrensparameter des computerimplementierten Verfahrens bei wiederholten Verfahrensdurchführungen variiert werden,
in einer Validierungsphase das trainierte computerimplementierte Verfahren unter Verwendung der Datensätze als Validierungsdatensätze überprüft wird, indem die mit dem trainierten computerimplementierten Verfahren mit den Eingabedaten berechneten Ausgabedaten mit den das richtige Prozessergebnis beschreibenden Ausgabedaten verglichen werden und als Ergebnis des Vergleichens eine tatsächliche Versagenswahrscheinlichkeit für das computerimplementierte Verfahren berechnet wird.

Hierbei ist zu berücksichtigen, dass das Prozessergebnis, welches durch die Ausgabedaten beschrieben wird, durch die Eingabedaten erzeugt wurde, denen das Prozessergebnis zugeordnet ist. Mit anderen Worten ist in dem Datenpool für alle Eingabedaten das Prozessergebnis in Form der Ausgabedaten bereits bekannt. Dieses macht die Durchführung des überwachten maschinellen Lernens möglich, da eine Überwachung darin besteht, zu überprüfen, ob die Ausgabedaten das richtige (bekannte) Prozessergebnis beschreiben. Erfindungsgemäß werden hierbei die mathematischen Grundlagen der statistischen Lerntheorie angewendet.

Folgendermaßen verhält es sich bei technischen Prozessen, die Klassifikationsprobleme behandeln. Wenn die Ausgabedaten eine bestimmte Klasse beispielsweise von Hindernissen beschreiben, dann muss die Klasse, die die berechneten Ausgabedaten beschreiben, exakt der durch die richtigen Ausgabedaten identifizierten Klasse entsprechen. Andernfalls liegt eine Fehlklassifikation vor. In diesen einfachen Fällen entspricht die Wahrscheinlichkeit einer Fehlklassifikation dem Sicherheitsrisiko, das bei dem Klassifikationsproblem zu bewerten ist.

Voraussetzung zur Durchführung des erfindungsgemäßen Verfahrens ist, dass die Daten im Datenpool hinreichend repräsentativ sind. Dies kann beispielsweise durch ein zufälliges Auswählen der Datensätze jeweils für die Gruppe an Trainingsdatensätzen und für die Gruppe an Validierungsdatensätzen gewährleistet werden. Die Datensätze des Datenpools können auf einer Datenerhebung beispielsweise durch Messungen in einem realen Prozess oder durch Simulation dieses realen Prozesses gewonnen werden. Die Simulation des realen Prozesses kann mit an sich bekannten Simulationsmethoden durchgeführt werden. Dabei handelt es sich jedoch nicht um die Trainingsphase, in der das computerimplementierte Verfahren trainiert wird.

Während in der Trainingsphase das computerimplementierte Verfahren variiert werden kann, um die Durchführung des zugehörigen technischen Prozesses möglichst weitgehend zu optimieren, darf das Verfahren während der Validierungsphase nicht mehr verändert werden. Die Trainingsphase dient der Optimierung des Verfahrens, während die Validierungsphase dazu dient, die Zuverlässigkeit des optimierten Verfahrens zu ermitteln. Um das Verfahren zu variieren, können beispielsweise Parameter des Verfahrens verändert werden. Dieses geschieht vorzugsweise zwischen einzelnen Verfahrensdurchführungen, sodass Ergebnisse der Verfahrensdurchführungen in Form der berechneten Ausgabedaten hinsichtlich des Optimierungsfortschrittes beurteilt werden können. Insbesondere können die berechneten Ausgabedaten mit den das richtige Prozessergebnis beschreibenden Ausgabedaten verglichen werden, wobei letztere Ausgabedaten in den Datensätzen vorhanden sind. Als Verfahrensdurchführung ist somit ein Teil im Verfahrensablauf zu verstehen, der sich innerhalb des Verfahrens derart abgrenzen lässt, dass dieser Teil eine Bewertung des Optimierungsfortschrittes ermöglicht. Insbesondere ist eine jeweilige Verfahrensdurchführung dadurch charakterisiert, dass innerhalb der Verfahrensdurchführung Eingabedaten eines Datensatzes verarbeitet werden und berechnete Ausgabedaten innerhalb der Verfahrensdurchführung erzeugt werden.

Die Zuverlässigkeit des Systems wird anhand der Versagenswahrscheinlichkeit des Verfahrens hinsichtlich richtig erzeugter Ausgabedaten beurteilt. Die Versagenswahrscheinlichkeit muss auf jeden Fall unterhalb einer Soll-Versagenswahrscheinlichkeit liegen, damit die Validierung des Verfahrens in der Validierungsphase als erfolgreich bewertet werden kann (zur Anwendung eines strengeren Kriteriums in Form einer korrigierten Versagenswahrscheinlichkeit im Folgenden noch mehr). In der Sicherheitstechnik wird die Soll-Versagenswahrscheinlichkeit auch als Sicherheitsziel oder als Sicherheitsziel oder target failure measure bezeichnet. Ein Versagen liegt beispielsweise bei einer Fehlklassifikation oder bei einer Abweichung der berechneten Ausgabedaten von den richtigen Ausgabedaten über die zulässigen Toleranzen hinaus vor.

Für sicherheitsrelevante Prozesse ist es von essenzieller Bedeutung, dass bei deren Einsatz eine vorgegebene Soll-Versagenswahrscheinlichkeit unterschritten wird, um Gefährdungen auszuschließen. Dafür wird beispielsweise eine Wahrscheinlichkeit eines gefahrbringenden Versagens bei Anforderung der Ausgabedaten des Verfahrens, die für den sicherheitsrelevanten Prozess benötigt werden, betrachtet (zu Englisch: probability of dangerous failure on demand, kurz PFD).

Gemäß der internationalen Norm IEC 61508 beziehungsweise spezifisch für den Bahnbereich gemäß der europäischen Norm EN 50129 werden für Sicherheitsfunktionen ausführende technische Prozesse (Safety) vier Sicherheits-Integritätslevel oder Englisch Safety Integrity Level (SIL) beziehungsweise Sicherheits-Anforderungsstufen unterschieden. Hierbei stellt der Sicherheits-Integritätslevel 4 die höchste und der Sicherheits-Integritätslevel 1 die niedrigste Stufe der Sicherheits-Integrität dar. Der jeweilige Sicherheits-Integritätslevel beeinflusst das Vertrauensintervall eines Messwertes dahingehend, dass das Vertrauensintervall umso kleiner ist, je höher der Sicherheits-Integritätslevel ist, der seitens der jeweiligen Vorrichtung zu erfüllen ist. Die Dimension der Sicherheit der verschiedenen Sicherheits-Integritätslevel lässt sich anschaulich mit der zu erwartenden Häufigkeit eines Ausfalls des Sicherheitsrelevanten Systems MTBF (Mean Time Between Failures) beschreiben. Diese liegt bei SIL-1 im Bereich von 10 ... 100 a, bei SIL-2 im Bereich von 100 ...1000 a, bei SIL-3 im Bereich von 1000 ... 10000 a, und bei SIL-4 im Bereich von 10000 ... 100000 a.

Wenn die tatsächliche Versagenswahrscheinlichkeit über der Soll-Versagenswahrscheinlichkeit liegt, dann ist das Ergebnis der Validierung, dass das trainierte Verfahren den Anforderungen an die Zuverlässigkeit des durchzuführenden Prozesses nicht erfüllt sind. Das trainierte Verfahren kann somit für einen Einsatz gesperrt werden. Es kann überdies eine erneute Trainingsphase eingeleitet werden. Wenn die tatsächliche Versagenswahrscheinlichkeit höchstens so hoch wie die Soll-Versagenswahrscheinlichkeit ist, dann war die Validierung erfolgreich. Das trainierte Verfahren kann somit zum Einsatz freigegeben werden.

Rechnergestützt oder computerimplementiert ist eine Vorrichtung, wenn diese mindestens einen Computer oder Prozessor aufweisen, oder ein Verfahren, wenn mindestens ein Computer oder Prozessor mindestens einen Verfahrensschritt des Verfahrens ausführt.

Eine Rechenumgebung ist eine IT-Infrastruktur, bestehend aus Komponenten wie Computern, Speichereinheiten, Programmen und aus mit den Programmen zu verarbeitenden Daten, die zur Ausführung mindestens einer Applikation, die eine Aufgabe zu erfüllen hat, verwendet werden. Die IT-Infrastruktur kann auch aus einem Netzwerk der genannten Komponenten bestehen.

Recheninstanzen (oder kurz Instanzen) bilden innerhalb einer Rechenumgebung funktionale Einheiten aus, die Applikationen (gegeben beispielsweise durch eine Anzahl von Programmmodulen) zugeordnet werden können und diese ausführen können. Diese funktionalen Einheiten bilden bei der Ausführung der Applikation physikalisch (beispielsweise Computer, Prozessor) und/oder virtuell (beispielsweise Programmmodul) in sich geschlossene Systeme.

Computer sind elektronische Geräte mit Datenverarbeitungseigenschaften. Computer können beispielsweise Clients, Server, Handheld-Computer, Kommunikationsgeräte und andere elektronische Geräte zur Datenverarbeitung sein, die Prozessoren und Speichereinheiten aufweisen können und über Schnittstellen auch zu einem Netzwerk zusammengeschlossen sein können.

Prozessoren können beispielsweise Wandler, Sensoren zur Erzeugung von Messsignalen oder elektronische Schaltungen sein. Bei einem Prozessor kann es sich um einen Hauptprozessor (engl. Central Processing Unit, CPU), einen Mikroprozessor, einen Mikrocontroller, oder einen digitalen Signalprozessor, möglicherweise in Kombination mit einer Speichereinheit zum Speichern von Programmbefehlen und Daten handeln. Auch kann unter einem Prozessor ein virtualisierter Prozessor oder eine Soft-CPU verstanden werden.

Speichereinheiten können als computerlesbarer Speicher in Form eines Arbeitsspeichers (engl. Random-Access Memory, RAM) oder Datenspeichers (Festplatte oder Datenträger) ausgeführt sein.

Programmmodule sind einzelne Software-Funktionseinheiten, die einen erfindungsgemäßen Programmablauf von Verfahrensschritten ermöglichen. Diese Software-Funktionseinheiten können in einem einzigen Computerprogramm oder in mehreren miteinander kommunizierenden Computerprogrammen verwirklicht sein. Die hierbei realisierten Schnittstellen können softwaretechnisch innerhalb eines einzigen Prozessors umgesetzt sein oder hardwaretechnisch, wenn mehrere Prozessoren zum Einsatz kommen.

Schnittstellen können hardwaretechnisch, beispielsweise kabelgebunden oder als Funkverbindung, oder softwaretechnisch, beispielweise als Interaktion zwischen einzelnen Programmmodulen eines oder mehrerer Computerprogramme, realisiert sein.

Sofern es in der nachfolgenden Beschreibung nicht anders angegeben ist, beziehen sich die Begriffe "erstellen", "feststellen", "berechnen", "generieren", "konfigurieren", "modifizieren" und dergleichen vorzugsweise auf Prozesse, die Daten erzeugen und/oder verändern und/oder die Daten in andere Daten überführen. Dabei liegen die Daten insbesondere als physikalische Größen vor, beispielsweise als elektrische Impulse oder analoge elektrische Größen. Die erforderlichen Anweisungen sind in einem Computerprogramm als Software zusammengefasst. Weiterhin beziehen sich die Begriffe "senden", "empfangen", "einlesen", "auslesen", "übertragen" und dergleichen auf das Zusammenspiel einzelner Hardwarekomponenten, insbesondere Prozessoren, und/oder Softwarekomponenten, insbesondere Programmmodule über Schnittstellen.

Wesentlich ist nun, dass
alle Datensätze im Datenpool sowohl als Trainingsdatensätze als auch als Validierungsdatensätze zur Verfügung gestellt werden, für die Trainingsphase eine empirische Versagenswahrscheinlichkeit festgelegt wird, die geringer ist, als eine vorgegebene Soll-Versagenswahrscheinlichkeit, und die Validierungsphase eingeleitet wird, nachdem in der Trainingsphase festgestellt wurde, dass die empirische Versagenswahrscheinlichkeit nicht überschritten wird.

Dass die Datensätze im Datenpool als Trainingsdatensätze und/oder als Validierungsdatensätze verwendet werden können, bedeutet, dass alle Datensätze sowohl als Trainingsdatensätze für die Trainingsphase als auch Validierungsdatensätze für die Validierungsphase zur Verfügung stehen. Bei den Trainingsdatensätzen und den Validierungsdatensätzen handelt es sich an sich also immer um die Datensätze aus dem Datenpool. Die begriffliche Unterscheidung wird im Zusammenhang mit der Beschreibung dieser Erfindung nur gewählt, damit der gerade mit der Nutzung der Datensätze intendierte Zweck besser zum Ausdruck kommt - mit anderen Worten: Dieselben Datensätze können nacheinander sowohl als Trainingsdatensätze zum Trainieren während des maschinellen Lernens als auch als Validierungsdatensätze zum Validieren des durch das maschinelle Lernen erreichten Ergebnisses verwendet werden.

Die vorstehend angesprochene Wiederverwendbarkeit der Datensätze sowohl für das Training als auch zum Validieren hat den Vorteil, dass mit der vorgegebenen Anzahl an Datensätzen das Ergebnis des zu optimierenden technischen Prozesses möglichst weit optimiert und anschließend möglichst zuverlässig validiert werden kann. Insbesondere, wenn, wie beispielsweise bei Bahn-Applikationen, vergleichsweise wenig Datensätze zum Trainieren und Validieren zur Verfügung stehen, ergibt sich bezüglich bekannter Verfahren, bei denen die Datensätze exklusiv entweder für das Trainieren oder für das Validieren verwendet werden, vorteilhaft ein (hinsichtlich des Optimums) besseres Trainingsergebnis und belastbares Validierungsergebnis

Das Verfahren zum überwachten maschinellen Lernen macht sich außerdem erfindungsgemäß Grundprinzipien zunutze, die für das statistische Lernen gelten. Da die tatsächliche Versagenswahrscheinlichkeit des zu trainierenden Verfahrens nach Abschluss der Trainingsphase noch nicht bekannt ist, besteht eine Unsicherheit, ob diese tatsächliche Versagenswahrscheinlichkeit über der vorgegebenen Soll-Versagenswahrscheinlichkeit liegen wird, und damit die Validierung fehlschlagen wird. Die tatsächliche Versagenswahrscheinlichkeit wird erst in der Validierungsphase bestimmt. Allerdings verbessern sich die Erfolgsaussichten für das überwachte maschinelle Lernen, wenn für die empirische Versagenswahrscheinlichkeit ein geringerer Wert angesetzt wird, als durch die Soll-Versagenswahrscheinlichkeit vorgegeben ist. Es entsteht sozusagen ein Sicherheitspuffer, der zur Wirkung kommt, wenn die in der Validierungsphase ermittelte tatsächliche Versagenswahrscheinlichkeit über der empirischen Versagenswahrscheinlichkeit liegt, weil für eine erfolgreiche Validierung nur die Bedingung erfüllt werden muss, dass die höher liegende Soll-Versagenswahrscheinlichkeit unterboten wird.

Eine Ausgestaltung der Erfindung bezieht sich auf ein überwachtes maschinelles Lernen, wobei bei der Durchführung einer Trainingsphase
für eine Wahrscheinlichkeitsdichte der Versagenswahrscheinlichkeit eine Beta-Verteilung B(p,q) festgelegt wird, indem für die Beta-Verteilung ein erster Parameter p und ein zweiter Parameter q vorgegeben werden, und die Trainingsphase eingeleitet wird,
die Wahrscheinlichkeitsdichte in Abständen überprüft wird, wobei ein Stichprobenumfang n für die Zahl von Verfahrensdurchführungen und eine Erfolgszahl m für die Zahl von erfolgreich durchgeführten Verfahrensdurchführungen (beides innerhalb einer Trainingsphase) berücksichtigt wird, eine modifizierte Beta-Verteilung B(pmod,qmod) abgeschätzt wird, für die modifizierte Beta-Verteilung ein P-Quantil bestimmt wird, wobei zum Bestimmen eine geforderte Wahrscheinlichkeit (PQ), dass ein Wert der modifizierten Beta-Verteilung links des P-Quantils liegt, mit der empirischen Versagenswahrscheinlichkeit gleichgesetzt wird und
für den Fall, dass das P-Qantil größer ist, als die empirische Versagenswahrscheinlichkeit, die Trainingsphase mit Schritt a) dieses Anspruchs fortgeführt wird, wobei für die Beta-Verteilung (B) der erste Parameter p und der zweite Parameter q der modifizierten Beta-Verteilung verwendet werden, und für den Fall, dass das P-Quantil kleiner oder gleich der empirischen Versagenswahrscheinlichkeit (Pₑₘₚ) ist, die Trainingsphase beendet wird.

Die gemäß dieser Ausgestaltung der Erfindung durchgeführte Vorgehensweise beruht auf dem statistischen Ansatz von Bayes. Die Wahrscheinlichkeitsdichte ergibt sich dabei aus der Wahrscheinlichkeitsverteilung, also aus dem Kurvenverlauf der Beta-Verteilung zwischen Null und Eins, wobei der Kurvenverlauf die Wahrscheinlichkeitsverteilung wiedergibt. Ziel des Vorgehens nach Bayes ist im Rahmen dieser Erfindung, die Wahrscheinlichkeitsdichte in einem durch den Bereich von Null bis zur empirischen Versagenswahrscheinlichkeit definierten ersten Bereich zu erhöhen und in einem zweiten Bereich oberhalb der empirischen Versagenswahrscheinlichkeit bis Eins entsprechend zu verringern. Der Prozess des maschinellen Lernens während der Trainingsphase kann als abgeschlossen gelten, wenn die Wahrscheinlichkeitsdichte in dem ersten Bereich so hoch ist, dass der Prozess mit einer Versagenswahrscheinlichkeit unterhalb der empirischen Versagenswahrscheinlichkeit durchgeführt werden kann.

Das beschriebene Ziel wird mit einer einzigen Durchführung der Trainingsphase mit der im ersten Schritt festgelegten Beta-Verteilung normalerweise nicht erreicht werden. Denn die Beta-Verteilung, welche im vorliegenden Optimierungsproblem das Ziel erreicht, ist üblicherweise am Anfang der Trainingsphase nicht bekannt und wird dadurch üblicherweise auf Standardwerte gesetzt werden, z. B. einheitlich auf 1. Dies macht das Trainieren des Prozesses mittels mehrerer Trainingsphasen nämlich überhaupt erst erforderlich. Um das Training zu überwachen, wird dabei die iterative statistische Bewertung nach dem Ansatz von Bayes durchgeführt.

Mit einer Durchlaufzahl D ist die Anzahl der durchgeführten Trainingsphasen gemeint. Der Stichprobenumfang n in einer Trainingsphase entspricht der Anzahl der verwendeten Trainingsdatensätze,
Die Erfolgszahl m ist die Anzahl der in einer Trainingsphase erfolgreich durchgeführten Verfahrensdurchführungen. Erfolgreich durchgeführte Verfahrensdurchführungen sind im Sinne der Erfindung diejenigen Verfahrensdurchführungen, bei denen der Prozess nicht versagt hat (das Verhältnis zwischen nicht erfolgreichen Verfahrensdurchführungen und insgesamt durchgeführten Verfahrensdurchführungen ergibt somit die Versagenswahrscheinlichkeit).

Auf die Beta-Verteilung wird im vorstehenden Schritt zur Berechnung der modifizierten Beta-Verteilung das Bayes-Theorem angewendet. Während die Beta-Verteilung, mit der die Trainingsphase durchgeführt wird, auch als Priori-Beta-Verteilung bezeichnet wird, wird die modifizierte Beta-Verteilung auch als Posteriori-Beta-Verteilung bezeichnet. Dies bedeutet mit anderen Worten, dass die Posteriori-Beta-Verteilung bei einem (falls erforderlich) nachfolgenden rekursiven Wiederholungsschritt in der Trainingsphase als Priori-Beta-Verteilung festgelegt wird. Wenn die Trainingsphase beendet werden kann, wird nachfolgend die Validierungsphase eingeleitet, nachdem in der Trainingsphase festgestellt wurde, dass die empirische Versagenswahrscheinlichkeit nicht überschritten wird.

Eine Ausgestaltung der Erfindung bezieht sich auf ein überwachtes maschinelles Lernen, wobei der erste Parameter p und der zweite Parameter q bei dem erstmaligen Durchlaufen einer Trainingsphase von Schritt a) des Anspruches 2 mit 1 vorgegeben werden.

Wie bereits erwähnt, ist die Beta-Verteilung für die zu erzielende Sicherheit des Prozesses (Sicherheit bedeutet in diesem Zusammenhang die Erfolgswahrscheinlichkeit bei einer hinreichend geringen Versagenswahrscheinlichkeit) am Anfang der Trainingsphase in der Regel nicht bekannt. Es können hier allerdings Expertenschätzungen für p und q einbezogen werden. Sofern als Beta-Verteilung zum Einstieg in den Trainingsprozess keine Vorkenntnisse bestehen, die eine bestimmte Beta-Verteilung naheliegen, kann auf jeden Fall mit der Beta-Verteilung B(1,1) gestartet werden. Grundsätzlich gilt jedoch, dass eine Trainingsphase umso schneller abgeschlossen werden kann, je näher die Beta-Verteilung für das Starten des Trainingsphase an der das aufzufindende Optimum beschreibenden Beta-Verteilung gelegen ist.

Eine Ausgestaltung der Erfindung bezieht sich auf ein überwachtes maschinelles Lernen, wobei
die bisher in der Trainingsphase (TP) mit den Eingabedaten in den Verfahrensdurchführungen berechneten Ausgabedaten mit den das richtige Prozessergebnis beschreibenden Ausgabedaten verglichen werden das Ergebnis des Vergleichens als aktuelle Versagenswahrscheinlichkeit (P_{cur}) für das computerimplementierte Verfahren berechnet wird,
die Wahrscheinlichkeitsdichte im Schritt b) von Anspruch 2 überprüft wird, indem mit dem Stichprobenumfang n und der Erfolgszahl m eine Wahrscheinlichkeitsfunktion L für die aktuelle Versagenswahrscheinlichkeit (P_{cur}) gebildet wird, zu L(P_{cur}) = P_{cur}^{m}(1-P_{cur})^{n-m} .

Auf die Wahrscheinlichkeitsfunktion L bedeutet die Anwendung des Bayes-Theorems, dass die modifizierte Beta-Verteilung B(pmod,qmod) als Verteilung für eine erfolgreiche Durchführung des technischen Prozesses verstanden werden kann. Die modifizierte Beta-Verteilung für die Versagenswahrscheinlichkeit des technischen Prozesses ergibt sich demnach als B(pmod,qmod). Dabei ist zu berücksichtigen, dass es sich hierbei um eine noch unbekannte Versagenswahrscheinlichkeit handelt, die aber an ihr zugehöriges Quantil gebunden werden soll (hierzu im Folgenden noch mehr).

Der Vorteil einer wiederholten Prüfung der Einhaltung der empirischen Versagenswahrscheinlichkeit (eingehalten wird diese, wenn die berechnete aktuelle Versagenswahrscheinlichkeit geringer ist, als die empirische Versagenswahrscheinlichkeit) liegt darin, dass die Überwachung der Trainingsphase trainingsbegleitend durchgeführt werden kann. Sobald die wiederholte Prüfung bestimmten festgelegten Abbruchkriterien für die Trainingsphase entspricht, kann diese beendet werden. Dies kann bedeuten, dass noch nicht alle Trainingsdatensätze (potenziell stehen ja alle Datensätze für ein Training zur Verfügung) verwendet wurden. Andererseits kann dies auch bedeuten, dass bereits alle Trainingsdatensätze einmal verwendet wurden und dass das Training unter mehrfacher Nutzung der zur Verfügung stehenden Trainingsdatensätze fortgeführt wird. Zusätzlich kann die Bedingung aufgestellt werden, dass für den Fall, dass ein Abbruchkriterium für die Trainingsphase erreicht wurde, jedoch noch nicht alle (Trainings)datensätze wenigstens einmal verwendet wurden, dass Training fortgeführt wird, bis alle Datensätze des Datenpools als Trainingsdatensätze verwendet wurden. Hierbei wird es normalerweise (jedoch nicht zwangsläufig) zu einer weiteren Verbesserung der Performance des computerimplementierten Verfahrens und des mit diesem verknüpften technischen Prozesses kommen.

Es kann vorteilhaft durch das wiederholte Durchlaufen von Betrachtungsintervallen ein Trend festgestellt werden, der eine gerichtete Optimierung während der Trainingsphase erlaubt und letztendlich zum Erfolg führen wird. Bezüglich der Trainingsphase liegt der Erfolg in der bereits vorstehend erwähnten Einleitung der Validierungsphase.

Für n+p = 1 kann das P-Quantil beispielsweise angegeben werden. n+p = 1 gilt, wenn in der Trainingsphase kein Fehler aufgetreten ist, jedoch in der Validierungsphase, oder andersherum, wenn in der Validierungsphase ein Fehler aufgetreten ist, jedoch nicht in der Trainingsphase. In diesem Falle kann für das P-Qantil folgende Angabe gemacht werden. $Q = \frac{- ln \left(1-p\right)}{n - m + q}$

Für alle n+p > 1 kann das P-Quantil in an sich bekannter Weise numerisch bestimmt werden. Im Ergebnis muss dabei selbstverständlich angestrebt werden, dass Q < PFD ist. Damit diese Aussage mit genügender statistischer Zuverlässigkeit getroffen werden kann, wird erfindungsgemäß in der Trainingsphase, wie bereits erläutert, die empirische Versagenswahrscheinlichkeit und nicht die Soll-Versagenswahrscheinlichkeit verwendet, sodass sich die Beziehung ergibt zu Q < Pₑₘₚ.

Vorzugsweise wird vorgeschlagen, dass ein auf die Soll-Versagenswahrscheinlichkeit bezogener Sicherheitsfaktor festgelegt wird, mit dem die empirische Versagenswahrscheinlichkeit berechnet wird, wobei die empirische Versagenswahrscheinlichkeit um einen Vertrauensanteil gegenüber der Soll-Versagenswahrscheinlichkeit verringert ist.

Die Berücksichtigung des Sicherheitsfaktors muss sicherstellen, dass die empirische Versagenswahrscheinlichkeit geringer ist, als die Soll-Versagenswahrscheinlichkeit. Der Sicherheitsfaktor ist damit als kleiner 1 anzusetzen, wenn dieser mit der Soll-Versagenswahrscheinlichkeit multipliziert wird. Ist als Sicherheitsfaktor eine Zahl größer 1 definiert, so beschreibt diese die (mehrfache) Sicherheit, dass die empirische Versagenswahrscheinlichkeit größer ist als die Soll-Versagenswahrscheinlichkeit. Die Soll-Versagenswahrscheinlichkeit muss somit durch den Sicherheitsfaktor größer 1 geteilt werden.

Die Festlegung eines Sicherheitsfaktors ermöglicht es vorteilhaft, ein Maß für die Verbesserung der Erfolgsaussichten des maschinellen Lernens zu erhalten, um diese Zuverlässigkeit besser einschätzen zu können. Erfindungsgemäß entsteht hierdurch ein Vertrauensanteil, der eine Unsicherheit hinsichtlich des Erreichens des angestrebten Ergebnisses der Trainingsphase berücksichtigt. Diese Unsicherheit besteht darin, dass die am Ende der Validierungsphase ermittelte tatsächliche Versagenswahrscheinlichkeit höher liegt, als die durch das Training erreichte empirische Versagenswahrscheinlichkeit, die in der Trainingsphase noch nicht mit hoher Zuverlässigkeit bestimmt werden kann.

Hierbei ist zu berücksichtigen, dass es mitunter schwer ist, eine große Anzahl von Datensätzen für die Verwendung als Trainingsdatensätze und/oder Validierungsdatensätze zur Verfügung zu stellen. Bei sehr großen Zahlen von Datensätzen steigen auch die Erfolgsaussichten. Stehen jedoch weniger Datensätze zur Verfügung, können besonders in diesem Fall die Erfolgsaussichten mit dem Sicherheitsfaktor verbessert werden (wobei natürlich auch bei einer großen Zahl von Datensätzen die Erfolgsaussichten für die Trainingsphase verbessert werden). Das Trainieren erfolgt durch einen maschinellen Lernalgorithmus, der durch eine Funktion f beschrieben werden kann. Dieser muss empirisch, d. h. während des Trainierens, mit einer geringeren empirischen Versagenswahrscheinlichkeit als der geforderten Versagenswahrscheinlichkeit unter Berücksichtigung des Sicherheitsfaktors durchführbar sein, damit das maschinelle Lernen mit sehr hoher Wahrscheinlichkeit erfolgreich abgeschlossen werden kann.

Vorzugsweise wird vorgeschlagen, dass der Sicherheitsfaktor mit mindestens 1/3 und höchstens 2/3, bevorzugt mit 1/2 festgelegt wird.

Im Falle des Sicherheitsfaktors von 1/2 kann also beispielsweise de facto mit der halben geforderten Versagenswahrscheinlichkeit PFD/2 gerechnet werden. Der Vertrauensanteil ist in diesem Fall ebenfalls PFD/2. Mit anderen Worten wird erfindungsgemäß ein Sicherheitsfaktor berücksichtigt, der im Ergebnis einen Vertrauensanteil erzeugt, der bei der Ermittlung der empirischen Versagenswahrscheinlichkeit berücksichtigt wird, wobei die Summe aus Sicherheitsfaktor und Vertrauensanteil gerade 1 ergibt. Dies gilt selbstverständlich auch für andere Sicherheitsfaktoren, beispielsweise von einschließlich 1/3 bis einschließlich 2/3.

Durch Verwendung des Sicherheitsfaktors ergibt sich vorteilhaft eine sehr einfache Methode, um die Trainingsphase insbesondere bei einer kleinen Anzahl von Datensätzen hinsichtlich der Zuverlässigkeit des erreichten Ergebnisses des Trainings abzusichern. Hierbei werden erfindungsgemäß die im Folgenden beschriebenen Zusammenhänge berücksichtigt. Dabei wird angenommen, dass die Datensätze genügend repräsentativ für das maschinelle Lernen sind. Dies muss unabhängig davon gegeben sein, ob diese aus der tatsächlichen Durchführung des technischen Prozesses oder der Simulation des technischen Prozesses entstammen. Sowohl für die Trainingsphase als auch für die Validierungsphase werden die Datensätze vorzugsweise nach dem Zufallsprinzip aufgeteilt.

Während der Trainingsphase wird, wie bereits erläutert, eine empirische Versagenswahrscheinlichkeit festgelegt, die von der tatsächlichen Versagenswahrscheinlichkeit, die nicht bekannt ist, abhängig ist. Diese Abhängigkeit ist vorzugsweise gegeben durch die folgende Funktion der Versagenswahrscheinlichkeit, welche sich unter Berücksichtigung der statistischen Lerntheorie ergibt. $P \left(\left|Pemp-Ptru\right|>ε\right) < α$ (1) mit
- P: Fehlklassifizierungswahrscheinlichkeit für ein erfolgreiches Training
- Pₑₘₚ: empirische Versagenswahrscheinlichkeit
- Pₜᵣᵤₑ: tatsächliche Versagenswahrscheinlichkeit (unbekannt)des trainierten zu validierenden Verfahrens
- ***ε***: Genauigkeit
- ***α***: statistische Signifikanz (Fehlerwahrscheinlichkeit) für die Trainingsphase

Diese Formel gibt allgemein eine Grundlage für die Abschätzung an, ob das maschinelle Lernen in der Trainingsphase fälschlicherweise als erfolgreich eingeschätzt wird. Erfolg heißt in diesem Falle, dass das trainierte Verfahren bei seiner Durchführung unterhalb oder gleich der Soll-Versagenswahrscheinlichkeit bleibt, wobei die statistische Signifikanz für die Trainingsphase hierbei berücksichtigt werden muss. Die Formel lässt leicht erkennen, dass die unbekannte tatsächliche Versagenswahrscheinlichkeit größer sein darf, als die zu ermittelnde empirische Versagenswahrscheinlichkeit, wobei die Differenz abhängig von der geforderten Genauigkeit ist. Anders ausgedrückt darf die Summe aus der empirischen Versagenswahrscheinlichkeit und der geforderten Genauigkeit höchstens so groß sein, wie die (zum Zeitpunkt der Abschätzung noch nicht bekannte) tatsächliche Versagenswahrscheinlichkeit. Erfindungsgemäß ist daher vorgesehen, dass ein von der geforderten Genauigkeit abhängiger Sicherheitsfaktor berücksichtigt wird, um den die zu erreichende empirische Versagenswahrscheinlichkeit verringert wird, damit nach Abschluss des Trainings die geforderte tatsächliche Versagenswahrscheinlichkeit mit sehr hoher Wahrscheinlichkeit unterboten oder höchstens erreicht wird. Der Sicherheitsfaktor kann beispielsweise bei mindestens 1/3 und höchstens 2/3 liegen. Bevorzugt kann der Sicherheitsfaktor bei 1/2 festgelegt werden. Bei einem Sicherheitsfaktor von 1/2 gilt beispielsweise: ${P}_{emp} = ε = PFD / 2$ (2), wobei hier die Genauigkeit und empirische Versagenswahrscheinlichkeit gleich groß sind. Im Folgenden wird ein die Genauigkeit ausdrückender Wert auch als Vertrauensanteil bezeichnet, weil dieser Vertrauensanteil, wie gezeigt werden wird, sich aus der geforderten Genauigkeit ableiten lässt. Dies bedeutet, dass der Vertrauensanteil umso größer gewählt werden muss, je geringer die Genauigkeit der Abschätzung (d. h. je größer ε) ist.

Vorzugsweise kann vorgesehen werden, dass die Trainingsdatensätze zur mehrfachen Verwendung für Verfahrensdurchläufe in der Trainingsphase freigegeben werden. Hierbei ist die Erkenntnis von Bedeutung, dass Trainingsdatensätze für ein Training mehrfach verwendet werden können, wobei eine Optimierung eines bereits teilweise trainierten computerimplementierten Verfahrens auch verbessert werden kann, wenn ein bestimmter Datensatz zum Training wiederholt verwendet wird. Anders, als bei der Validierung, leidet hierunter nicht die sichere Beurteilung des Lernerfolgs während der Validierungsphase.

Vorzugsweise wird vorgeschlagen, dass eine statistische Signifikanz des Ergebnisses der Validierungsphase berücksichtigt wird, indem in der Validierungsphase zum Vergleichen mit der tatsächlichen Versagenswahrscheinlichkeit eine korrigierte Versagenswahrscheinlichkeit festgelegt wird, die geringer ist als die vorgegebene Soll-Versagenswahrscheinlichkeit.

Die korrigierte Versagenswahrscheinlichkeit ermöglicht es also, eine statistische Signifikanz für die Validierungsphase zu berücksichtigen, wobei die statistische Signifikanz die Wahrscheinlichkeit zum Ausdruck bringt, dass die Validierung eines trainierten computerimplementierten Verfahrens fälschlich erfolgt. Damit ist gemeint, dass die Validierung erfolgreich ist, obwohl die tatsächliche Fehlerwahrscheinlichkeit höher als die Soll-Fehlerwahrscheinlichkeit liegt.

Hierbei wird erfindungsgemäß ein Umstand genutzt, der sich bei der Interpretation von statistischen Wahrscheinlichkeiten im Allgemeinen ergibt und erfindungsgemäß für das Validierungsverfahren genutzt werden kann. Danach ist die Wahrscheinlichkeit als gering einzuschätzen, für den mit der betreffenden statistischen Signifikanz eintretenden Fall, dass die tatsächliche Versagenswahrscheinlichkeit größer ist, als die Soll-Versagenswahrscheinlichkeit und dass sich für die tatsächliche Versagenswahrscheinlichkeit eine im Verhältnis zur Soll-Versagenswahrscheinlichkeit starke Überschreitung ergibt. Demgegenüber ist die Wahrscheinlichkeit als hoch einzuschätzen für den mit der betreffenden statistischen Signifikanz eintretenden Fall, dass die tatsächliche Versagenswahrscheinlichkeit größer ist, als die Soll-Versagenswahrscheinlichkeit und dass sich für die tatsächliche Versagenswahrscheinlichkeit eine im Verhältnis zur Soll-Versagenswahrscheinlichkeit geringe Überschreitung ergibt. Mit anderen Worten wird man durch die erfindungsgemäße Berücksichtigung einer im Vergleich zur Soll-Versagenswahrscheinlichkeit geringeren korrigierten Versagenswahrscheinlichkeit die meisten Fälle eines Validierungsfehlers abdecken und somit die Wahrscheinlichkeit, dass die Validierung fälschlich erfolgreich ist, noch einmal verringern. Hierbei können für den Korrekturfaktor c vorteilhaft beispielsweise Werte im Bereich zwischen einschließlich 0,9 und 1,0 (wobei 1,0 selbst ausgeschlossen ist) gewählt werden.

Diese erfindungsgemäße Erkenntnis ist insbesondere bei sicherheitsrelevanten technischen Prozessen vorteilhaft anwendbar, da bei diesen auch für die Richtigkeit einer erfolgreichen Validierung eines bestimmten erlernten computerimplementierten Verfahrens sehr hohe Anforderungen gestellt werden. Diese Anforderungen können mit der oben geführten Sicherheitsargumentation insbesondere einer erfolgreichen gutachterlichen Zertifizierung genügen. Damit wird es vorteilhaft möglich, die Anwendung des maschinellen Lernens in einer sicherheitsrelevanten Umgebung auch unter hohen Sicherheitsanforderungen erfolgreich zuzulassen (zulassen im Sinne einer positiven Zertifizierung), sodass das maschinelle Lernen auch im Rahmen des laufenden sicherheitsrelevanten Betriebs durchgeführt werden darf, ohne Sicherheitsvorgaben zu verletzten.

Einer Verletzung wird erfindungsgemäß dadurch begegnet, dass eine strengere Vorgabe gemacht wird, nämlich dass bei der Validierung die ermittelte tatsächliche Fehlerwahrscheinlichkeit unter der korrigierten Versagenswahrscheinlichkeit liegen muss, obwohl die zu erreichende Soll-Versagenswahrscheinlichkeit höher liegt als die korrigierte Versagenswahrscheinlichkeit. Damit wird das Risiko für eine fälschliche Validierung vorteilhaft verringert, da durch die sich bildende Differenz zwischen der Soll-Versagenswahrscheinlichkeit und der korrigierten Versagenswahrscheinlichkeit sozusagen ein statistischer Sicherheitspuffer gebildet wird.

Vorzugsweise wird vorgeschlagen, dass die korrigierte Versagenswahrscheinlichkeit berechnet wird, indem die Soll-Versagenswahrscheinlichkeit mit einem Faktor multipliziert wird, der sich daraus ergibt, dass von 1 die statistische Signifikanz subtrahiert wird und die mit einem Korrekturfaktor, der kleiner als 1 ist, multiplizierte statistische Signifikanz addiert wird.

Mit anderen Worten muss die folgende Bedingung für die korrigierte Versagenswahrscheinlichkeit erfüllt sein. $Pval = α c PFD + \left(1-α\right) PFD = PFD \left(1-α+αc\right)$ (5) mit
- Pᵥₐₗ: Validierungsfehler (Missclassification) berücksichtigende korrigierte Versagenswahrscheinlichkeit
- ***α***: statistische Signifikanz (Fehlerwahrscheinlichkeit) für die Validierungsphase
- **1- *α***: statistische Konfidenz (Vertrauenswahrscheinlichkeit) für die Validierungsphase
- c: Konstante (< 1)
- PFD: Soll-Versagenswahrscheinlichkeit

Um eine Abhängigkeit der korrigierten Versagenswahrscheinlichkeit von der statistischen Signifikanz abbilden zu können, ist der Korrekturfaktor c erforderlich. Dieser ist mit < 1 anzusetzen, damit die korrigierte Versagenswahrscheinlichkeit geringer ist als die Soll-Versagenswahrscheinlichkeit. Zur Bestimmung des Korrekturfaktors können beispielsweise erfolgreiche Anwendungen des überwachten maschinellen Lernens ausgewertet werden. Außerdem kann der Korrekturfaktor c variiert werden, wenn sich herausstellt, dass der hinsichtlich der Zuverlässigkeit von Validierungen keine belastbaren Aussagen erzeugt. Durch wiederholtes Anwenden des überwachten maschinellen Lernens ist also auch ein "Lernen" des Korrekturfaktors c möglich.

Die Anwendung der oben erläuterten Gleichung hat den Vorteil, dass mit einfachen Mitteln eine Maßnahme zur Verfügung steht, die Sicherheit der Validierungsphase zu erhöhen. Diese lässt sich durch Angabe einer Berechnungsformel vorteilhaft besonders leicht in ein computerimplementiertes maschinelles Lernen integrieren. Die zum vorstehenden Anspruch erläuterten Vorteile gelten für die Anwendung dieser Formel entsprechend.

Die genannte Aufgabe wird alternativ mit dem eingangs angegebenen Anspruchsgegenstand (technisches System) erfindungsgemäß auch dadurch gelöst, dass die Systemkomponente des technischen Systems eingerichtet ist, das computerimplementierte Verfahren nach einem der vorgenannten Ansprüche auszuführen

Mit der Vorrichtung lassen sich die Vorteile erreichen, die im Zusammenhang mit dem obenstehend näher beschriebenen Verfahren bereits erläutert wurden. Das zum erfindungsgemäßen Verfahren Aufgeführte gilt entsprechend auch für die erfindungsgemäße Vorrichtung.

Des Weiteren wird ein Programmmodule enthaltendes Computerprogramm mit Programmbefehlen zur Durchführung des genannten erfindungsgemäßen Verfahrens und/oder dessen Ausführungsbeispielen beansprucht, wobei mittels des Computerprogramms jeweils das erfindungsgemäße Verfahren und/oder dessen Ausführungsbeispiele durchführbar sind.

Darüber hinaus wird eine Bereitstellungsvorrichtung zum Speichern und/oder Bereitstellen des Computerprogramms beansprucht. Die Bereitstellungsvorrichtung ist beispielsweise ein Speichereinheit, die das Computerprogramm speichert und/oder bereitstellt. Alternativ und/oder zusätzlich ist die Bereitstellungsvorrichtung beispielsweise ein Netzwerkdienst, ein Computersystem, ein Serversystem, insbesondere ein verteiltes, beispielsweise cloudbasiertes Computersystem und/oder virtuelles Rechnersystem, welches das Computerprogramm vorzugsweise in Form eines Datenstroms speichert und/oder bereitstellt.

Die Bereitstellung erfolgt in Form eines Programmdatensätzen als Datei, insbesondere als Downloaddatei, oder als Datenstrom, insbesondere als Downloaddatenstrom, des Computerprogramms. Diese Bereitstellung kann beispielsweise aber auch als partieller Download erfolgen, der aus mehreren Teilen besteht. Ein solches Computerprogramm wird beispielsweise unter Verwendung der Bereitstellungsvorrichtung in ein System eingelesen, sodass das erfindungsgemäße Verfahren auf einem Computer zur Ausführung gebracht wird. Weitere Einzelheiten der Erfindung werden nachfolgend anhand der Zeichnung beschrieben. Gleiche oder sich entsprechende Zeichnungselemente sind jeweils mit den gleichen Bezugszeichen versehen und werden nur insoweit mehrfach erläutert, wie sich Unterschiede zwischen den einzelnen Figuren ergeben.

Bei den im Folgenden erläuterten Ausführungsbeispielen handelt es sich um bevorzugte Ausführungsformen der Erfindung .

Es zeigen:
Figur 1 ein Ausführungsbeispiel der erfindungsgemäßen Vorrichtung (technisches System in Form eines Bahnübergangs) mit ihren Wirkzusammenhängen schematisch,
Figur 2 ein Ausführungsbeispiel einer Rechenumgebung für die Vorrichtung gemäß Figur 1 als Blockschaltbild, wobei die einzelnen Recheninstanzen Programmmodule ausführen, die jeweils in einem oder mehreren der beispielhaft dargestellten Computer ablaufen können und wobei die gezeigten Schnittstellen demgemäß softwaretechnisch in einem Computer oder hardwaretechnisch zwischen verschiedenen Computern ausgeführt sein können,
Figur 3 ein Ausführungsbeispiel des erfindungsgemäßen Verfahrens als Flussdiagramm, wobei die einzelnen Verfahrensschritte einzeln oder in Gruppen durch Programmmodule verwirklicht sein können und wobei die Recheninstanzen und Schnittstellen gemäß Figur 2 beispielhaft angedeutet sind,
Figur 4 beispielhaft und schematisch die zur Anwendung kommenden Modelle zur Berechnung bzw. Abschätzung unterschiedlicher Wahrscheinlichkeiten, dargestellt auf einem Strahl für die Wahrscheinlichkeit P.

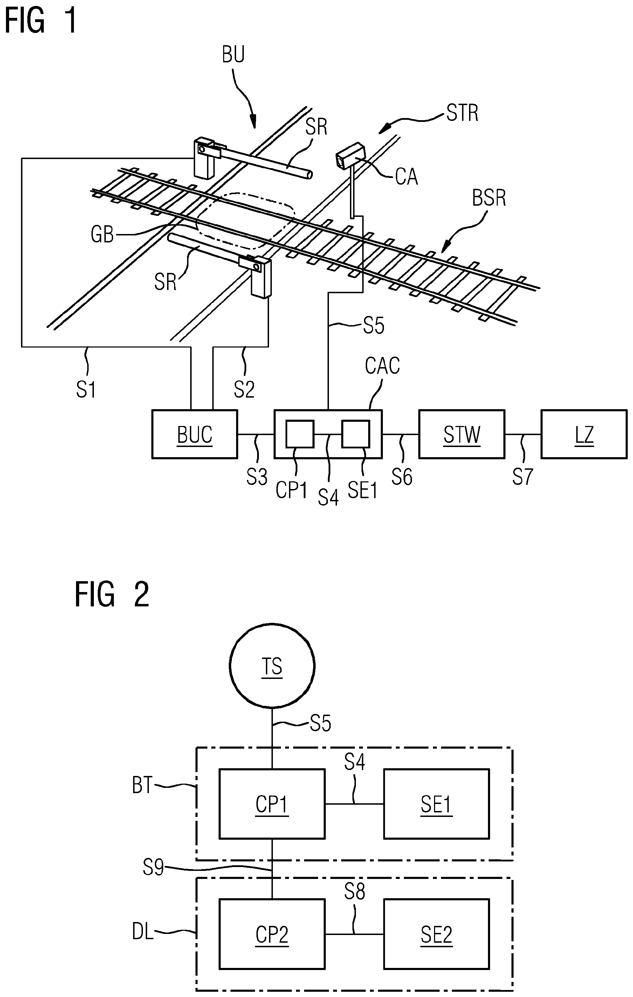

In Figur 1 ist ein Bahnübergang BU dargestellt. Im Bereich des Bahnübergangs BU kreuzt eine Bahnstrecke BSR eine Straße STR für KFZ. Im Kreuzungsbereich entsteht daher ein Gefahrenraum, an dem potenziell ein spurgeführtes Fahrzeug, welches auf der Bahnstrecke BSR unterwegs ist, mit Hindernissen auf der Straße STR (beispielsweise Fahrzeuge oder Fußgänger) zusammenstoßen kann. Daher ist der Bahnübergang BU durch Schranken SR abgegrenzt, die über eine erste Schnittstelle S1 und eine zweite Schnittstelle S2 mit einem Bahnübergangscontroller BUC verbunden sind.

Der Bahnübergangscontroller BUC ist über eine dritte Schnittstelle S3 mit einem Kameracontroller CAC verbunden, der seinerseits über eine fünfte Schnittstelle S5 mit einer Kamera CA verbunden ist. Über eine erste Schnittstelle S1 und eine zweite Schnittstelle S2 ist der Bahnübergangscontroller BUC jeweils mit einer von zwei Schranken SR verbunden, so dass diese eine Schließkommando und ein Öffnungskommando empfangen und umsetzen können.

Die Kamera CA dient einer optischen Überwachung des Gefahrenbereiches GB (häufig auch als Gefahrenraum bezeichnet), sodass Hindernisse in dem Gefahrenbereich GB erkannt werden können. Damit der Kameracontroller CAC eine Bilderkennung zum Zwecke der Erkennung von Hindernissen durchführen kann, wird dieser erfindungsgemäß mit einem maschinellen Lernen trainiert. Hierzu weist dieser einen ersten Computer CP1 und eine erste Speichereinrichtung SE1 auf, die über eine vierte Schnittstelle S4 miteinander verbunden sind (vergleiche auch Figur 2).

Außerdem ist der Kameracontroller CAC mit einem Stellwerk STW über eine sechste Schnittstelle S6 verbunden. Das Stellwerk STW ist einerseits mit einer Leitzentrale LZ verbunden, und zwar über eine siebte Schnittstelle. Bahnübergangscontroller BUC, Kammercontroller CMC, Stellwerk STW und Leitzentrale LZ bilden somit ein Netzwerk, welches als technisches System TS (siehe Figur 2) einer Bahnanlage, im vorliegenden Fall den Bahnübergang BU sowie weitere Infrastrukturkomponenten der Bahnanlage (nicht dargestellt in Figur 1) umfassen.

In Figur 2 ist eine Computerinfrastruktur dargestellt, die einerseits einem Betreiber BT und andererseits einen Dienstleister DL zugerechnet werden können. Der Betreiber BT und der Dienstleister DL können über eine neunte Schnittstelle miteinander kommunizieren, die den ersten Computer CP1 mit einem zweiten Computer C2 verbindet. Der zweite Computer C2 ist überdies über eine achte Schnittstelle mit einer zweiten Speichereinrichtung SE2 verbunden. Über die fünfte Schnittstelle S5 kommuniziert der erste Computer CP1, der dem Betreiber BT zuzurechnen ist, mit dem technischen System TS, welches in Figur 1 repräsentativ durch die Kamera CA angedeutet ist, jedoch, wie bereits erläutert, auch weitere Komponenten der Bahninfrastruktur beinhalten kann.

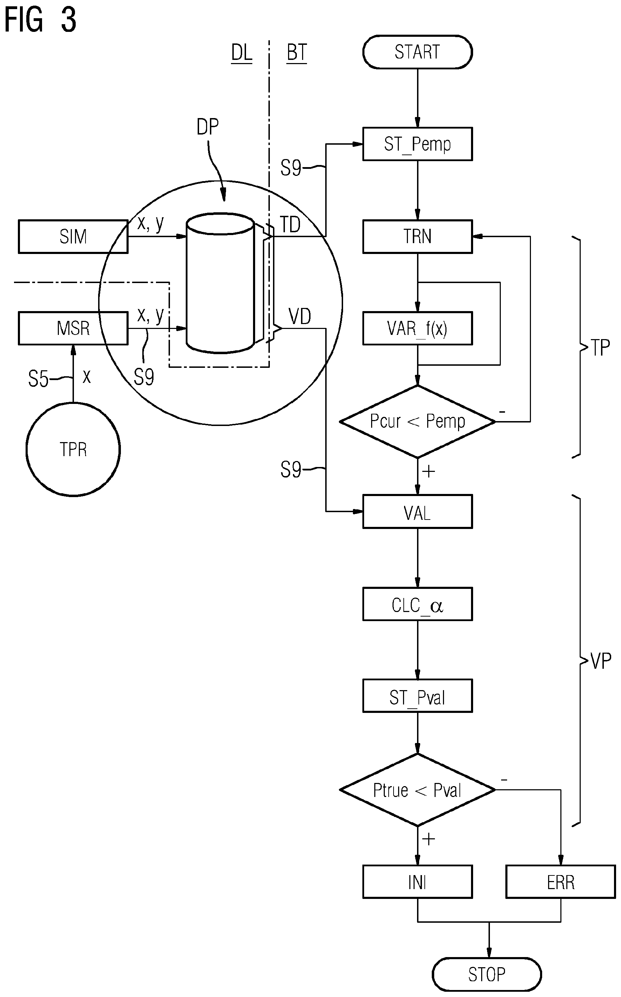

Das computerimplementierte Verfahren zur Durchführung des technischen Prozesses TPR kann, wie in Figur 3 dargestellt, durchgeführt werden, wobei beispielsweise durch Messungen in einem Messschritt MSR Ausgangsgrößen y ermittelt werden können, die sich aus den zugehörigen Eingangsgrößen x ergeben. Alternativ zur Durchführung des technischen Prozesses TPR in der Realität, kann dieser technische Prozess TPR auch in einem Simulationsschritt SIM simuliert werden, wobei durch Simulation zu den Eingangsgrößen x die Ausgangsgrößen y, die sich bei Durchführung des Prozesses ergeben würden, berechnet werden.

In einem Datenpool DP werden die Datensätze x, y, die sich jeweils aus den Eingangsgrößen x und den Ausgangsgrößen y ergeben, gespeichert. Die Datensätze x, y sind sowohl als Trainingsdatensätze TD als auch als Validierungsdatensätze VD verwendet, was durch die geschweiften Klammern angedeutet ist. Zusätzlich können die Trainingsdatensätze TD auch während einer Trainingsphase TP mehrfach zum Einsatz kommen.

In Figur 3 wird der Simulationsschritt SIM durch den Dienstleister DL vorgenommen. Dies ist durch eine strichpunktierte Trennlinie angedeutet. Demgegenüber werden der Messschritt MSR sowie das maschinelle Lernen, bestehend aus der Trainingsphase TP und der Validierungsphase VP, durch den Betreiber BT vorgenommen.

Steht der Datenpool DP mit einer genügenden Anzahl n von Datensätzen x, y zur Verfügung, wird das Verfahren des maschinellen Lernens gestartet und es folgt als nächstes eine Trainingsphase TP des erfindungsgemäßen Verfahrens. In einem Trainingsschritt TRN wird das Verfahren durch einen wiederholten Variationsschritt VAR_f(x) ein Algorithmus trainiert und nach abgeschlossenem Training der Algorithmus festgelegt. Anschließend erfolgt ein erster Abfrageschritt P_{cur}<Pₑₘₚ, ob das Ergebnis des Algorithmus bei der betreffenden Eingangsgröße x die im Datenpool DP gespeicherte Ausgangsgröße y ergibt (gegebenenfalls unter Berücksichtigung eines Toleranzbereiches, der eine zulässige Abweichung der gespeicherten Ausgangsgröße y von der mittels des Algorithmus berechneten Ausgangsgöße festlegt). Ist dies der Fall, wird die Trainingsphase TP abgeschlossen.

Auf die Trainingsphase TP folgt eine Validierungsphase VP. In der Validierungsphase VP werden folgende Schritte durchlaufen. In einem Bestimmungsschritt CLC_α wird die statistische Signifikanz α festgelegt. Darauf folgt ein Bestimmungsschritt, in dem eine korrigierte Versagenswahrscheinlichkeit Pval ermittelt wird. Die korrigierte Versagenswahrscheinlichkeit Pᵥₐₗ berücksichtigt die festgelegte statistische Signifikanz α bezüglich eines Versagens, das heißt falschen Ergebnisses der Validierungsphase VP. In einem zweiten Abfrageschritt Pₜᵣᵤ<Pᵥₐₗ wird geprüft, ob die tatsächliche Versagenswahrscheinlichkeit Pₜᵣᵤₑ kleiner ist, als die korrigierte Versagenswahrscheinlichkeit Pᵥₐₗ. Im Falle eines positiven Ergebnisses dieser Abfrage wird nachfolgend in einem Initialisierungsschritt INI der maschinell gelernte Algorithmus für den nachfolgenden Einsatz in dem betreffenden technischen Prozess TPR freigegeben und eingeführt. Sollte der zweite Abfrageschritt Pₜᵣᵤ<Pᵥₐₗ jedoch zu einem negativen Ergebnis führen, wird in einem Ausgabeschritt ERR eine Fehlermeldung ausgegeben. In beiden Fällen wird anschließend der gesamte Prozess des maschinellen Lernens beendet.

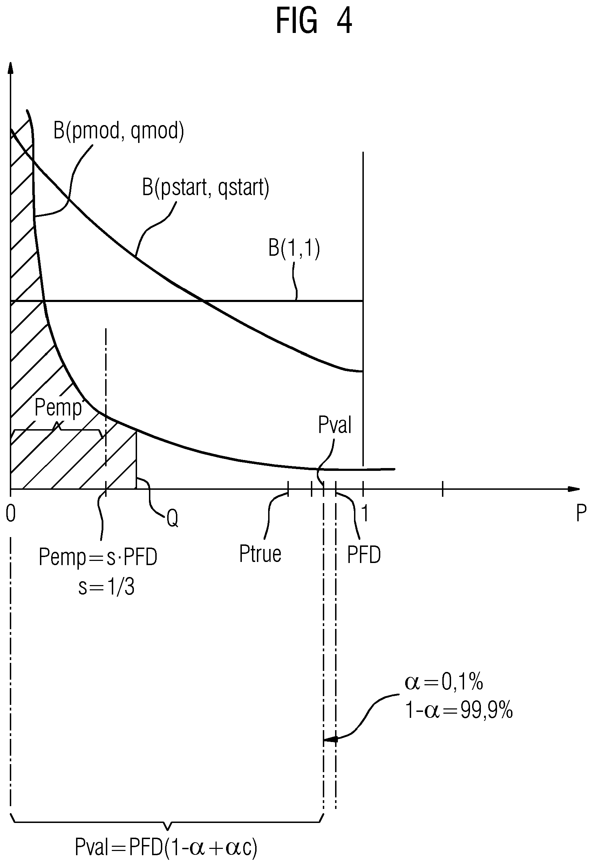

In Figur 4 sind die Zusammenhänge der einzelnen berechneten und tatsächlichen Wahrscheinlichkeiten, die für das erfindungsgemäße Verfahren des maschinellen Lernens relevant sind, schematisch anhand eines die Wahrscheinlichkeit P darstellenden Strahls (im Folgenden als Wahrscheinlichkeitsstrahl bezeichnet) dargestellt.

Wenn das maschinelle Lernen mit der Trainingsphase TP beginnt, ist die Validierungsphase VP noch durchzuführen. Allerdings sollen Besonderheiten, die mit der statistischen Unsicherheit, verbunden mit der Validierungsphase VP, bestehen, bereits in der Trainingsphase TP berücksichtigt werden. Zu diesem Zweck wird in zwei Stufen vorgegangen, um die Sicherheit des maschinellen Lernens gegen einen Misserfolg wirkungsvoll zu schützen. Diese beiden Stufen erhöhen die Sicherheit gegen einen Misserfolg unabhängig voneinander.

Aufgrund der Sicherheitsrelevanz des technischen Prozesses TPR, für den ein Algorithmus mittels des maschinellen Lernens trainiert werden soll, ist eine Soll-Versagenswahrscheinlichkeit PFD vorgegeben, die sich aus den besonderen Umständen des technischen Systems TS und dessen Betrieb ergibt. Nach Abschluss der Trainingsphase TP des maschinellen Lernens muss diese Soll-Versagenswahrscheinlichkeit PFD unbedingt eingehalten werden, wobei diese angibt, wie hoch die Wahrscheinlichkeit ist, dass der Algorithmus bei der Durchführung des technischen Prozesses TPR nach Anforderung in dem technischen System TS versagt.

Um bei einer begrenzten Anzahl von Trainingsdatensätzen TD eine Sicherheit zu erzeugen, dass der in der Trainingsphase TP trainierte Algorithmus die Validierungsphase VP erfolgreich durchlaufen wird, wird in einer ersten Stufe eine empirische Versagenswahrscheinlichkeit Pemp festgelegt, die im Beispiel gemäß Figur 4 bei einer Sicherheit s = 1/3 (auch Sicherheitsfaktor genannt), also bei einem Drittel der Soll-Versagenswahrscheinlichkeit PFD liegt.

Der Ablauf der Trainingsphase lässt sich anhand von Figur 4 anschaulich wie folgt beschreiben. Für einen Einstieg in die Trainingsphase wird eine Betaverteilung als Startwert festgelegt. Wenn keine Informationen über den Prozess vorliegen, kann auf jeden Fall mit der Betaverteilung B(1,1) begonnen werden. Aufgrund von Vorkenntnissen kann allerdings auch eine dem zu erreichenden Ziel näher liegende Betaverteilung B (pₛₜₐᵣₜ, qₛₜₐᵣₜ) festgelegt werden, wenn diese bereits bekannt ist. Unter Zugrundelegung dieser Betaverteilung wird der Trainingsphase gestartet.

In der Trainingsphase wird das computerimplementierte Verfahren zur Durchführung des technischen Prozesses iterativ verbessert (durch maschinelles Lernen). In Abständen wird dann überprüft, wie sich die Wahrscheinlichkeitsdichte aufgrund des durchgeführten Trainierens ändert. Dabei wird in jeder Trainingsphase ein (möglicherweise unterschiedlicher) Stichprobenumfang n berücksichtigt.

Unter Berücksichtigung des Stichprobenumfangs n und der Erfolgszahl m lässt sich eine modifizierte Betaverteilung B(pmod,qmod) abschätzen, wobei allgemein nach Überprüfung die gefundene modifizierte Betaverteilung für die weiteren Trainingsschritte als zugrunde liegende Betaverteilung festgelegt wird, so lange, bis ein P-Quantil Q kleiner oder gleich der empirischen Versagenswahrscheinlichkeit ist. Dann ist die Trainingsphase beendet.

Die in Figur 4 dargestellte Vorgehensweise beruht auf dem statistischen Ansatz von Bayes. Die Wahrscheinlichkeitsdichte ergibt sich dabei aus der Wahrscheinlichkeitsverteilung, also aus dem Kurvenverlauf der Beta-Verteilung B zwischen Null und Eins, wobei der Kurvenverlauf die Wahrscheinlichkeitsverteilung wiedergibt. Ziel des Vorgehens nach Bayes ist es, die Wahrscheinlichkeitsdichte in einem durch den Bereich von Null bis zur empirischen Versagenswahrscheinlichkeit definierten ersten Bereich zu erhöhen und in einem zweiten Bereich oberhalb der empirischen Versagenswahrscheinlichkeit bis Eins entsprechend zu verringern. Der Prozess des maschinellen Lernens während der Trainingsphase ist abgeschlossen, wenn die Wahrscheinlichkeitsdichte in dem ersten Bereich so hoch ist, dass der Prozess mit einer Versagenswahrscheinlichkeit unterhalb der empirischen Versagenswahrscheinlichkeit durchgeführt werden kann.

Um die Wahrscheinlichkeitsverteilung für die Versagenswahrscheinlichkeit beurteilen zu können, wird das P-Quantil Q gebildet, welches ein Maß für die in der Trainingsphase bisher erreichte Versagenswahrscheinlichkeit (in Figur 4 schraffiert) darstellt. Q soll dabei Pₑₘₚ, also im Fall gemäß Figur 4 gerade 1/3 PFD erreichen oder unterschreiten. In Figur 4 ist schraffiert dargestellt, wie groß der Bereich im Falle der Wahrscheinlichkeitsdichte B(pmod,qmod) aktuell ausfällt. Es wird deutlich, dass in dem gemäß Figur 4 dargestellten Fall das P-Quartil immer noch größer ist, als die empirische Versagenswahrscheinlichkeit Pemp und daher das Verfahren noch nicht abgeschlossen ist. Wenn das P-Quartil Q unterhalb der empirischen Versagenswahrscheinlichkeit Pemp fällt, ist die Trainingsphase erfolgreich abgeschlossen.

Das beschriebene Ziel der Trainingsphase wird mit der im ersten Schritt festgelegten Beta-Verteilung normalerweise nicht erreicht werden. Denn die Beta-Verteilung, welche im vorliegenden Optimierungsproblem das Ziel erreicht, ist üblicherweise am Anfang der Trainingsphase nicht bekannt. Dies macht das Trainieren des Prozesses in der Trainingsphase erforderlich. Um das Training zu überwachen, wird dabei die iterative statistische Bewertung nach dem Ansatz von Bayes durchgeführt.

Wie bereits beschrieben, soll nach der Trainingsphase TP die Validierungsphase VP durchgeführt werden. Diese dient einer Validierung des trainierten Algorithmus, wobei hierbei die Validierungsdatensätze VD verwendet werden. Für jeden dieser Anzahl an Datensätzen x;y wird der Algorithmus mit den zugehörigen Eingabedaten in einem Validierungsschritt durchgeführt und das Ergebnis mit dem im Validierungsdatensatz VD gespeicherten Soll-Ergebnis (hierbei handelt es sich um die Ausgabedaten) verglichen. Die Summe aller Validierungsschritte, die der Anzahl an Validierungsdatensätzen VD entspricht, bildet einen Validierungsdurchlauf. Aus dem Verhältnis der Zahl der Validierungsschritte n_{fail}, bei denen der Algorithmus versagt hat, zu der Gesamtheit nᵥₐₗ der Validierungsschritte lässt sich die tatsächliche Versagenswahrscheinlichkeit Pₜᵣᵤₑ direkt berechnen zu: ${P}_{true} = {n}_{fain} / {n}_{val}$

Auch der Validierungsprozess, der in der Validierungsphase VP durchlaufen wird (Validierungsdurchlauf), ist mit einer statistischen Unsicherheit behaftet, die sich mit der statistischen Signifikanz α beschreiben lässt. Soll das Verfahren des maschinellen Lernens für sicherheitskritische Anwendungen zertifiziert werden, so muss diese statistische Unsicherheit bei der Durchführung des maschinellen Lernens berücksichtigt werden. Dies erfolgt durch Bestimmung einer korrigierten Versagenswahrscheinlichkeit Pᵥₐₗ, die in der zweiten Stufe dem Validierungsverfahren zugrunde gelegt werden muss. Für die Validierung wird gefordert, dass diese korrigierte Versagenswahrscheinlichkeit Pᵥₐₗ bei der Validierung, d. h. bei der Bestimmung der tatsächlichen Versagenswahrscheinlichkeit Pₜᵣᵤₑ zugrunde gelegt werden muss, mit anderen Worten die ermittelte tatsächliche Versagenswahrscheinlichkeit Pₜᵣᵤₑ geringer sein muss, als die korrigierte Versagenswahrscheinlichkeit Pᵥₐₗ (und nicht die Soll-Versagenswahrscheinlichkeit PFD). Die korrigierte Versagenswahrscheinlichkeit Pᵥₐₗ ergibt sich zu: $Pval = αc PFD + \left(1-α\right) PFD = PFD \left(1-α+αc\right)$ (5)

Zu bemerken ist, dass die erste Stufe und die zweite Stufe unabhängig voneinander durchgeführt werden. Dies bedeutet insbesondere, dass für die Einschätzung, ob die empirische Versagenswahrscheinlichkeit Pₑₘₚ für die gegebene Anzahl nᵥₐₗ von Validierungsdatensätzen VD ausreicht, die Soll-Versagenswahrscheinlichkeit PFD zugrunde gelegt werden kann, unabhängig davon für die Validierung unter Berücksichtigung der statistischen Signifikanz α jedoch eine geringere korrigierte Versagenswahrscheinlichkeit Pᵥₐₗ zugrunde gelegt wird, die durch die tatsächliche Versagenswahrscheinlichkeit Pₜᵣᵤₑ nicht überschritten werden darf.

### Bezugszeichenliste

- BI: Betrachtungsintervalls
- BSR: Bahnstrecke
- B(...): Beta-Verteilung
- p: erster Parameter
- q: zweiter Parameter

- BT: Betreiber
- BU: Bahnübergang
- BUC: Bahnübergangscontroller
- C2: zweiter Computer
- CA: Kamera
- CAC: Kameracontroller
- CLC_α: Bestimmungsschritt
- CP1: ersten Computer
- DL: Dienstleister
- DP: Datenpool
- ERR: Ausgabeschritt
- GB: Gefahrenbereich
- INI: Initialisierungsschritt
- LZ: Leitzentrale
- L: Wahrscheinlicheitsfunktion
- MSR: Messschritt
- n: Stichprobenumfang
- m: Erfolgszahl
- nᵥₐₗ: Anzahl der Validierungsschritte
- n_{fail}: Zahl der Validierungsschritte
- PQ: Versagenswahscheinlichkeit gemäß P-Quartil
- P_{cur}: aktuelle Versagenswahrscheinlichkeit
- P_{cur}<Pₑₘₚ: erster Abfrageschritt
- Pₑₘₚ: empirische Versagenswahrscheinlichkeit
- PFD: Soll-Versagenswahrscheinlichkeit
- Pₜᵣᵤₑ<Pᵥₐₗ: zweite Abfrageschritt
- Pₜᵣᵤₑ: tatsächliche Versagenswahrscheinlichkeit
- Pᵥₐₗ: korrigierte Versagenswahrscheinlichkeit
- Q: P-Quantil
- s: Sicherheitsfaktor
- S1 ... S9: Schnittstelle
- SE1: erste Speichereinrichtung
- SE2: zweiten Speichereinrichtung
- SIM: Simulationsschritt
- SR: Schranke
- STR: Straße
- STW: Stellwerk
- TD: Trainingsdatensätze
- TP: Trainingsphase
- TPR: technischen Prozesses
- TRN: Trainingsschritt
- TS: technisches System
- VA: Vertrauensanteils
- VAR_f(x): Variationsschritt
- VD: Validierungsdatensätze
- VP: Validierungsphase
- x: Eingangsgröße
- x;y: Datensätze
- y: Ausgangsgröße
- z: kritischen Faktors
- α: statistische Signifikanz

## Patentansprüche

1. Verfahren zum überwachten maschinellen Lernen eines computerimplementierten Verfahrens zur Durchführung eines technischen Prozesses (TPR) , mit dem eine Bilderkennung zum Zwecke einer Hinderniserkennung in einem Gefahrenbereich (GB) eines Bahnübergangs (BU) durchführbar ist, um ein Schließkommando und ein Öffnungskommando auszuführen, bei dem die folgenden computerimplementierten Schritte durchgeführt werden, dass
a) ein Datenpool (DP), enthaltend Datensätze (x;y) mit Eingabedaten für den Prozess und den Eingabedaten zugeordneten, ein richtiges Prozessergebnis beschreibenden Ausgabedaten, erstellt wird,
b) das computerimplementierte Verfahren unter Verwendung der Datensätze als Trainingsdatensätze (TD) in einer Trainingsphase (TP) trainiert wird, wobei Verfahrensparameter des computerimplementierten Verfahrens bei wiederholten Verfahrensdurchführungen variiert werden,
c) in einer Validierungsphase (VP) das trainierte computerimplementierte Verfahren unter Verwendung der Datensätze als Validierungsdatensätze (VD) überprüft wird, indem die mit dem trainierten computerimplementierten Verfahren mit den Eingabedaten berechneten Ausgabedaten mit den das richtige Prozessergebnis beschreibenden Ausgabedaten verglichen werden und als Ergebnis des Vergleichens eine tatsächliche Versagenswahrscheinlichkeit (Pₜᵣᵤₑ) für das computerimplementierte Verfahren berechnet wird, wobei für eine erfolgreiche Validierung eine Bedingung erfüllt sein muss,
dass zumindest eine vorgegebene Soll-Versagenswahrscheinlichkeit (PFD) unterboten wird, und wobei das trainierte computerimplementierte Verfahren im Falle einer erfolgreichen Validierung zum Einsatz für die Hindernisereknnung freigegeben wird,
**dadurch gekennzeichnet, dass**
I) dieselben Datensätze (x;y) im Datenpool (DP) sowohl als Trainingsdatensätze (TD) verwendet als auch als Validierungsdatensätze (VD) verwendet werden.
II) für die Trainingsphase (TP) eine empirische Versagenswahrscheinlichkeit (Pₑₘₚ) festgelegt wird, die geringer ist als die vorgegebene Soll-Versagenswahrscheinlichkeit (PFD),
III) die Validierungsphase (VP) eingeleitet wird, nachdem in der Trainingsphase (TP) festgestellt wurde, dass die empirische Versagenswahrscheinlichkeit (Pₑₘₚ) nicht überschritten wird.

2. Verfahren nach Anspruch 1, **dadurch gekennzeichnet, dass** bei der computerimplementierten Durchführung der Trainingsphase
a) für eine Wahrscheinlichkeitsdichte der Versagenswahrscheinlichkeit eine Beta-Verteilung B(p,q) festgelegt wird, indem für die Beta-Verteilung ein erster Parameter p und ein zweiter Parameter q vorgegeben werden, und die Trainingsphase eingeleitet wird,
b) die Wahrscheinlichkeitsdichte in Abständen überprüft wird, wobei ein Stichprobenumfang n für eine Zahl von Verfahrensdurchführungen in der Trainungsphase und eine Erfolgszahl m für eine Zahl von erfolgreich in der Trainingsphase durchgeführten Verfahrensdurchführungen berücksichtigt wird,
c) eine modifizierte Beta-Verteilung B(pmod,qmod) abgeschätzt wird,
d) für die modifizierten Beta-Verteilung ein P-Quantil bestimmt wird, wobei zum Bestimmen eine geforderte Wahrscheinlichkeit (PQ), dass ein Wert der modifizierten Beta-Verteilung links des P-Quantils liegt, mit der empirischen Versagenswahrscheinlichkeit gleichgesetzt wird,
e) für den Fall, dass das P-Quantil größer ist, als die empirische Versagenswahrscheinlichkeit, die Trainingsphase mit Schritt a) dieses Anspruchs fortgeführt wird, wobei für die Beta-Verteilung (B) der erste Parameter p und der zweite Parameter q der modifizierten Beta-Verteilung verwendet werden, und für den Fall, dass das P-Quantil kleiner oder gleich der empirischen Versagenswahrscheinlichkeit (Pₑₘₚ) ist, die Trainingsphase beendet wird.

3. Verfahren nach Anspruch 2, **dadurch gekennzeichnet, dass** der erste Parameter p und der zweite Parameter q bei dem erstmaligen Durchlaufen von Schritt a) des voranstehenden Anspruches mit Eins vorgegeben werden.

4. Verfahren nach Anspruch 2 oder 3, **dadurch gekennzeichnet**,
a) die bisher in der Trainingsphase (TP) mit den Eingabedaten in den Verfahrensdurchführungen berechneten Ausgabedaten mit den das richtige Prozessergebnis beschreibenden Ausgabedaten verglichen werden das Ergebnis des Vergleichens als aktuelle Versagenswahrscheinlichkeit (P_{cur}) für das computerimplementierte Verfahren berechnet wird,
b) die Wahrscheinlichkeitsdichte im Schritt b) von Anspruch 2 überprüft wird, indem mit dem Stichprobenumfang n und der Erfolgszahl m eine Wahrscheinlichkeitsfunktion L für die aktuelle Versagenswahrscheinlichkeit (P_{cur}) gebildet wird, zu L(P_{cur}) = P_{cur}^{m}(1-P_{cur})^{n-m} .

5. Verfahren nach einem der vorhergehenden Ansprüche, **dadurch gekennzeichnet, dass** ein auf die Soll-Versagenswahrscheinlichkeit (PFD) bezogener Sicherheitsfaktor (s) festgelegt wird, mit dem die empirische Versagenswahrscheinlichkeit (Pₑₘₚ) berechnet wird, wobei die empirische Versagenswahrscheinlichkeit (Pₑₘₚ) um einen Vertrauensanteil (VA) gegenüber der Soll-Versagenswahrscheinlichkeit (PFD) verringert ist.

6. Verfahren nach Anspruch 5, **dadurch gekennzeichnet, dass** der Sicherheitsfaktor (s) mit mindestens 1/3 und höchstens 2/3, bevorzugt mit 1/2 festgelegt wird.

7. Verfahren nach einem der vorhergehenden Ansprüche, **dadurch gekennzeichnet, dass** die Trainingsdatensätze (TD) zur mehrfachen Verwendung für Verfahrensdurchläufe in der Trainingsphase (TP) freigegeben werden.

8. Verfahren nach einem der vorhergehenden Ansprüche, **dadurch gekennzeichnet, dass** eine statistische Signifikanz (α) des Ergebnisses der Validierungsphase (VP) berücksichtigt wird, indem in der Validierungsphase (VP) zum Vergleichen mit der tatsächlichen Versagenswahrscheinlichkeit (Pₜᵣᵤₑ) eine korrigierte Versagenswahrscheinlichkeit (Pᵥₐₗ) festgelegt wird, die geringer ist, als die vorgegebene Soll-Versagenswahrscheinlichkeit (PFD).

9. Verfahren nach Anspruch 8, **dadurch gekennzeichnet, dass** die korrigierte Versagenswahrscheinlichkeit (Pᵥₐₗ) berechnet wird, indem die Soll-Versagenswahrscheinlichkeit (PFD) mit einem Faktor multipliziert wird, der sich daraus ergibt, dass von 1 die statistische Signifikanz (α) subtrahiert wird und die mit einem Korrekturfaktor (c), der kleiner als 1 ist, multiplizierte statistische Signifikanz (α) addiert wird.

10. Ein technisches System zum Durchführen eines technischen Prozesses (TPR) mit einer Systemkomponente, die einen Computer aufweist,
**dadurch gekennzeichnet, dass**
dass das technische System (TS) ein Bahnübergang (BU) ist, wobei bei diesem Bahnübergang (BU) das computerimplementierte Verfahren eingerichtet ist, eine Bilderkennung zum Zwecke einer Hinderniserkennung in einem Gefahrenbereich (GB) des Bahnübergangs (BU) durchzuführen, um ein Schließkommando und ein Öffnungskommando auszuführen, und die Systemkomponente des technischen Systems (TS) eingerichtet ist, das computerimplementierte Verfahren nach einem der vorgenannten Ansprüche auszuführen.

11. Ein Computerprogramm umfassend Programmbefehle die bei der Ausführung des Programms durch einen Computer diesen dazu veranlassen, das Verfahren nach einem der Ansprüche 1-9 durchzuführen.

12. Ein Computerlesbares Speichermedium, auf dem das Computerprogramm nach dem letzten voranstehenden Anspruch gespeichert ist.

## Claims

1. Method for supervised machine learning of a computer-implemented method for carrying out a technical process (TPR), with which an image recognition for the purpose of an obstacle recognition in a danger zone (GB) of a level crossing (BU) can be performed in order to implement a close command and an open command, in which the following computer-implemented steps are performed, that
a) a data pool (DP) is created containing data sets (x;y) with input data for the process and output data representing a correct process result and associated with the input data,
b) the computer-implemented method is trained making use of the data sets as training data sets (TD) in a training phase (TP), wherein method parameters of the computer-implemented method are varied during repeated executions of the method,
c) in a validation phase (VP), the trained computer-implemented method is checked making use of the data sets as validation data sets (VD) in that the output data calculated using the trained computer-implemented method with the input data is compared with the output data representing the correct process result and, as the result of the comparison, an actual failure probability (Pₜᵣᵤₑ) is calculated for the computer-implemented method, wherein for a successful validation, a condition must be met that at least one predefined target failure probability (PFD) is undershot and wherein the trained computer-implemented method is made available for use for the obstacle recognition in the case of a successful validation, **characterised in that**
I) the same data sets (x;y) in the data pool (DP) are used both as training data sets (TD) and also as validation data sets (VD),
II) for the training phase (TP), an empirical failure probability (Pₑₘₚ) is specified that is lower than the predefined target failure probability (PFD),
III) the validation phase (VP) is initiated once it has been ascertained in the training phase (TP) that the empirical failure probability (Pₑₘₚ) is not exceeded.

2. Method according to claim 1, **characterised in that** during the computer-implemented execution of the training phase
a) for a probability density of the failure probability, a beta distribution B(p,q) is specified **in that** for the beta distribution, a first parameter p and a second parameter q are predefined, and the training phase is initiated,
b) the probability density is checked at intervals, wherein a sample size n for a number of executions of the method in the training phase and a success count m for a number of successfully performed executions of the method in the training phase are taken into account,
c) a modified beta distribution B(pmod,qmod) is estimated,
d) a P-quantile is determined for the modified beta distribution, wherein for the determination, a required probability (PQ) that a value of the modified beta distribution lies to the left of the P-quantile, it is set equal to the empirical failure probability,
e) in the event that the P-quantile is greater than the empirical failure probability, the training phase is continued with step a) of this claim, wherein, for the beta distribution (B), the first parameter p and the second parameter q of the modified beta distribution is used and, in the event that the P-quantile is less than or equal to the empirical failure probability (Pₑₘₚ), the training phase is ended.

3. Method according to claim 2, **characterised in that** the first parameter p and the second parameter q are predefined as 1 on the first execution of step a) of the preceding claim.

4. Method according to claim 2 or 3, **characterised in that**
a) the output data previously calculated in the training phase (TP) with the input data in the executions of the method is compared with the output data representing the correct process result, the result of the comparison is calculated as the current failure probability (P_{cur}) for the computer-implemented method,
b) the probability density in step b) of claim 2 is checked **in that** with the sample size n and the success count m, a probability function L for the current failure probability (P_{cur}) is formed according to L(P_{cur}) = P_{cur}^{m}(1-P_{cur})^{n-m} .

5. Method according to one of the preceding claims, **characterised in that** a safety factor (s) relating to the target failure probability (PFD) is specified with which the empirical failure probability (Pₑₘₚ) is calculated, wherein the empirical failure probability (Pₑₘₚ) is reduced by a confidence component (VA) relative to the target failure probability (PFD).

6. Method according to claim 5, **characterised in that** the safety factor (s) is specified as at least 1/3 and not more than 2/3, preferably 1/2.

7. Method according to one of the preceding claims, **characterised in that** the training data sets (TD) are made available for multiple use for executions of the method in the training phase (TP).

8. Method according to one of the preceding claims, **characterised in that** a statistical significance (α) of the result of the validation phase (VP) is taken into account **in that** in the validation phase (VP), for comparison with the actual failure probability (Pₜᵣᵤₑ), a corrected failure probability (Pᵥₐₗ) is specified that is lower than the predefined target failure probability (PFD).

9. Method according to claim 8, **characterised in that** the corrected failure probability (Pᵥₐₗ) is calculated **in that** the target failure probability (PFD) is multiplied by a factor given by subtracting the statistical significance (α) from 1 and adding the statistical significance (α) multiplied by a correction factor (c) that is less than 1.

10. Technical system for carrying out a technical process (TPR) with a system component that has a computer,
**characterised in that**
the technical system (TS) is a level crossing (BU), wherein for said level crossing (BU), the computer-implemented method is configured to carry out image recognition an image recognition for the purpose of an obstacle recognition in a danger zone (GB) of the level crossing (BU), in order to implement a close command and an open command, and the system component of the technical system (TS) is configured to carry out the computer-implemented method according to one of the aforementioned claims.

11. Computer program comprising program commands which, when the program is executed by a computer, cause said computer to carry out the method according to one of claims 1 to 9.

12. Computer-readable storage medium on which the computer program according to the last preceding claim is stored.

## Revendications

1. Procédé d'apprentissage automatique supervisé d'un procédé mis en œuvre par ordinateur pour effectuer une opération (TPR) technique, par laquelle une reconnaissance d'image peut être effectuée, afin de reconnaître un obstacle dans une zone (GB) de danger d'un passage à niveau (BU), afin d'exécuter une instruction de fermeture et une instruction d'ouverture, dans lequel on effectue les stades mis en œuvre par ordinateur suivants, en ce que
a) on établit un regroupement (DP) de données contenant des ensembles (x ; y) de données ayant des données d'entrée pour l'opération et des données de sortie associées aux données d'entrée et décrivant un résultat correct de l'opération,
b) on fait l'apprentissage du procédé mis en œuvre par ordinateur en utilisant, dans une phase (TP) d'apprentissage, les ensembles de données, comme ensembles (TD) de données d'apprentissage, dans lequel on fait varier des paramètres du procédé mis en œuvre par ordinateur, lors de l'exécution répétée du procédé,
c) dans une phase (VP) de validation, on contrôle le procédé mis en œuvre par ordinateur ayant subi l'apprentissage, en utilisant des ensembles de données, comme ensembles (VD) de données de validation, en comparant les données de sortie, calculées par le procédé mis en œuvre par ordinateur ayant subi un apprentissage avec les données d'entrée, aux données de sortie décrivant le résultat correct de l'opération et on calcule, comme résultat de la comparaison, une probabilité (Pₜᵣᵤₑ) réelle d'échec pour le procédé mis en œuvre par ordinateur, dans lequel, pour une validation couronnée de succès, doit être satisfaite une condition .
qu'au moins une probabilité (PFD) donnée à l'avance d'échec de consigne soit franchie, et dans lequel on valide, pour l'utilisateur pour la reconnaissance d'obstacle, le procédé mis en œuvre par ordinateur ayant subi un apprentissage dans le cas d'une validation couronnée de succès,
**caractérisé en ce que**
I) on utilise les mêmes ensembles (x ; y) de données dans le regroupement (DP) de données, tant comme ensembles (TD) de données d'apprentissage, qu'également comme ensembles (VD) de données de validation,
II) pour la phase (TP) d'apprentissage, on fixe une probabilité (Pₑₘₚ) empirique d'échec, qui est plus petite que la probabilité (PFD) donnée à l'avance d'échec de consigne,
III) on lance la phase (VP) de validation, après qu'il a été constaté dans la phase (TP) d'apprentissage que la probabilité (Pₑₘₚ) empirique d'échec n'a pas été dépassée.

2. Procédé suivant la revendication 1,
**caractérisé en ce que**, lors de l'exécution mise en œuvre par ordinateur de la phase d'apprentissage,
a) on fixe, pour une densité de la probabilité d'échec, une répartition B(p,q) en prescrivant pour la répartition B, un premier paramètre p et un deuxième paramètre q, et on lance la phase d'apprentissage,
b) on contrôle la densité de probabilité à des distances, dans lequel on prend en compte une taille n d'échantillon pour un nombre d'exécutions du procédé dans la phase d'apprentissage et un nombre m de succès pour un nombre d'exécutions du procédé effectuées avec succès dans la phase d'apprentissage,
c) on estime une répartition béta B(pmod, qmod) modifiée,
d) on détermine un P quantile pour la répartition béta modifiée, dans lequel, pour la détermination d'une probabilité (PQ) exigée qu'une valeur de la répartition béta modifiée se trouve .
à gauche du P quantile, on met au même niveau que la probabilité empirique d'échec,
e) dans le cas où le P quantile est plus grand que la probabilité empirique d'échec, on poursuit la phase d'apprentissage par le stade a) de cette revendication, dans lequel, pour la répartition béta (B), on utilise le premier paramètre p et le deuxième paramètre q de la répartition béta modifiée, et, dans le cas où le P quantile est inférieur ou égal à la probabilité (Pₑₘₚ) empirique d'échec, on met fin à la phase d'apprentissage.

3. Procédé suivant la revendication 2,
**caractérisé en ce que** l'on prescrit à un le premier paramètre p et le deuxième paramètre q, lorsque l'on effectue pour la première fois le stade a) de la revendication précédente.

4. Procédé suivant la revendication 2 ou 3,
caractérisé
a) en ce que l'on compare les données de sortie, calculées jusqu'ici dans la phase (TP) d'apprentissage avec les données d'entrée dans les exécutions de procédé, aux données de sortie décrivant le résultat correct de l'opération, on calcule le résultat de la comparaison comme probabilité (P_{cur}) d'échec en cours pour le procédé mis en œuvre par ordinateur,
b) en ce que l'on contrôle la densité de probabilité au stade
b) de la revendication 2, en formant avec la taille n d'échantillon et le nombre m de succès, une fonction L de probabilité pour la probabilité (P_{cur}) en cours, en L(P_{cur}) = P_{cur}^{m}(1-P_{cur})^{n-m}.

5. Procédé suivant l'une des revendications précédentes,
**caractérisé en ce que** l'on fixeun facteur (s) de sécurité, rapporté à la probabilité (PFD) d'échec de consigne, par lequel on calcule la probabilité (Pₑₘₚ) empirique d'échec, dans lequel on diminue la . probabilité (Pₑₘₚ) empirique d'échec d'une proportion (VA) de confiance par rapport à la probabilité (PFD) d'échec de consigne.

6. Procédé suivant la revendication 5,
**caractérisé en ce que** l'on fixe le facteur (s) de sécurité à au moins 1/3 et au plus 2/3, de préférence à 1/2.

7. Procédé suivant l'une des revendications précédentes,
**caractérisé en ce que** l'on valide les ensembles (TD) de données d'apprentissage pour l'utilisation plusieurs fois pour des exécutions de procédé dans la phase (TP) d'apprentissage.

8. Procédé suivant l'une des revendications précédentes,
**caractérisé en ce que** l'on prend en compte une signification (α) statistique du résultat de la phase (VP) de validation, par le fait, que dans la phase (VP) de validation pour la comparaison avec la probabilité (Pₜᵣᵤₑ) réelle d'échec, on fixe une probabilité (Pᵥₐₗ) corrigée d'échec, qui est plus petite que la probabilité (PFD) donnée à l'avance d'échec de consigne.

9. Procédé suivant la revendication 8,
**caractérisé en ce que** l'on calcule la probabilité (Pᵥₐₗ) corrigée d'échec, en multipliant la probabilité (PFD) d'échec de consigne par un facteur, qui provient de ce que l'on a soustrait de 1 la signification (α) statistique, par un facteur (c) de correction, et on additionne, multipliée par un facteur (c) de correction, qui est plus petit que 1, la signification (α) statistique.

10. Un système technique pour effectuer une opération (TPR) technique d'un composant de système, qui a un ordinateur,
**caractérisé**
**en ce que** le système (TS) technique est un passage à niveau (BU), dans lequel, dans ce passage à niveau (BU), le procédé mis en œuvre par ordinateur est agencé pour effectuer une reconnaissance . d'image, afin de reconnaître un obstacle dans une zone (GB) de danger du passage à niveau (BU), afin d'exécuter une instruction de fermeture et une instruction d'ouverture, et le composant du système (TS) technique est agencé pour exécuter le procédé mis en œuvre par ordinateur suivant l'une des revendications précédentes.

11. Un programme d'ordinateur comprenant des instructions de programme qui, lors de l'exécution du programme par l'ordinateur, font que celui-ci effectue le procédé suivant l'une des revendications 1 à 9.

12. Support de mémoire, déchiffrable par ordinateur, sur lequel est mis en mémoire le programme d'ordinateur suivant la dernière revendication précédente. .
